# EUROPÄISCHE PATENTANMELDUNG

(11) **EP 4 306 263 A1**
(43) Veröffentlichungstag der Anmeldung: **17.01.2024**
(21) Anmeldenummer: 23172146.5
(22) Anmeldetag: 08.05.2023
(51) Int. Cl.: B24B 39/04, B23P 15/14, B62D 5/04, F16H 25/20, B21K 1/76, B23P 9/02, B23P 13/00

(54) **VERFAHREN ZUR HERSTELLUNG EINER SCHUBSTANGE FÜR EINE KRAFTFAHRZEUGLENKUNG**

(30) Priorität: 15.07.2022 DE 102022207245
(71) Anmelder: VOLKSWAGEN AG, 38440 Wolfsburg (DE)
(72) Erfinder: Huk, André, 38110 Braunschweig (DE)

(57) **Zusammenfassung**

Bei einem Verfahren zur Herstellung einer Schubstange (10) für eine Kraftfahrzeuglenkung (1), wobei die Schubstange (10) mindestens einen Spindelabschnitt (11) mit einer Gewindespindel (11a) und einen Führungsabschnitt (12) mit einem polygonalen Profil (12a) zur Gleitführung und Verdrehsicherung an einer stationären Führungseinrichtung der Kraftfahrzeuglenkung (1) aufweist, ist vorgesehen, dass an dem Führungsabschnitt (12) die finale Form des polygonalen Profils (12a) durch Glattwalzen hergestellt wird.

## Beschreibung

Die Erfindung bezieht sich auf ein Verfahren zur Herstellung einer Schubstange für eine Kraftfahrzeuglenkung, wobei die Schubstange mindestens einen Spindelabschnitt mit einer Gewindespindel und einen Führungsabschnitt mit einem polygonalen Profil zur Gleitführung und Verdrehsicherung an einer stationären Führungseinrichtung der Kraftfahrzeuglenkung aufweist.

Bei elektromechanischen Kraftfahrzeuglenkungen kommt üblicherweise ein Kugelgewindetrieb zum Einsatz, um ein Antriebsmoment eines Elektromotors der Kraftfahrzeuglenkung in eine Axialkraft an der Schubstange zu übersetzen, welche ihrerseits an ihren Enden über entsprechende Gelenke und Spurstangen mit gelenkten Rädern eines Kraftfahrzeugs gekoppelt ist.

Durch den Gewindeeingriff wirkt auf die Schubstange ein Drehmoment ein, welches an einer stationären Führungseinrichtung der Kraftfahrzeuglenkung abgestützt werden muss, damit die Schubstange nicht um ihre Längsachse dreht.

Hierbei besteht das technische Problem, ein solches Drehmoment über die gesamte Lebensdauer des Kraftfahrzeugs stabil abzustützen. Im Hinblick auf das Lenkverhalten dürfen dabei nur minimale Verdrehwinkel der Schubstange um ihre Längsachse zugelassen werden. Andererseits soll durch eine entsprechende Drehmomentabstützung für die Schubstange die Reibung in der Lenkung unter Drehmoment nicht zu stark ansteigen.

Allgemein bekannte rollengeführte Drehmomentabstützungen sind diesbezüglich technisch gut geeignet, jedoch in der Herstellung sehr teuer.

Es wurde daher bereits erwogen, zur Drehmomentabstützung der Schubstange eine Gleitführung vorzusehen, wie dies in DE 10 2013 107 827 A1 und DE 10 2016 200 102 A1 beschrieben ist. Die dort dargestellten Schubstangen weisen jeweils mindestens einen Spindelabschnitt mit einer Gewindespindel und einen gleitgeführten Führungsabschnitt mit einem polygonalen Profil auf.

Davon ausgehend liegt der Erfindung die Aufgabe zu Grunde, eine solche Drehmomentabstützung der Schubstange mit Gleitführung im Hinblick auf die Gewährleistung der Führung über die gesamte Lebensdauer sowie im Hinblick auf die Reibung weiter zu verbessern.

Diese Aufgabe wird durch ein Verfahren gemäß Patentanspruch 1 gelöst. Das erfindungsgemäße Verfahren sieht insbesondere vor, dass an dem Führungsabschnitt die finale Form des polygonalen Profils durch Glattwalzen hergestellt wird.

Es hat sich gezeigt, dass sich hierdurch zum einen die maximal auftretenden Verdrehwinkel der Schubstange ausgesprochen gering halten lassen und zum anderen Reibungsverluste in der Lenkung durch die Gleitführung weiter reduziert werden können. Überdies gestattet das erfindungsgemäße Verfahren eine vorteilhafte prozessuale Abstimmung im Hinblick auf die Fertigung des Spindelabschnitts der Schubstange.

Besondere Ausführungsarten der Erfindung sind Gegenstand weiterer Patentansprüche.

So kann beispielsweise für den Führungsabschnitt zunächst eine Vorform mit einem polygonalen Vorprofil hergestellt werden. Die Schubstange wird im Bereich dieser Vorform dann zusätzlich einem Glattwalzen zur Erstellung der finalen Form des polygonalen Profils unterzogen. Hierdurch bleiben die durch das Glattwalzen zu erstellenden Formänderungen gering. Dies gilt entsprechend für die benötigte Fertigungszeit.

Die Herstellung des polygonalen Vorprofils erfolgt vorzugsweise durch ein anderes umformendes Fertigungsverfahren und/oder ein spanabhebendes Fertigungsverfahren. Geeignete umformende Fertigungsverfahren zur Erstellung des polygonalen Vorprofils sind beispielsweise Schmieden, Halbwarmschmieden, Taumeln oder Walzen.

Gemäß einer weiteren besonderen Ausführungsart kann die Formgebung an dem Führungsabschnitt für die finale Form des polygonalen Profils aus einer Vorform durch Glattwalzen vollständig konturgewalzt werden. Eine Vorabherstellung eines polygonalen Vorprofils ist in diesem Fall nicht vorgesehen. Beispielsweise kann das polygonale Profil aus einem Rohling mit rundem Querschnitt hergestellt werden. Dieses Verfahren bietet sich insbesondere dann an, wenn gegenüber dem runden Ursprungsquerschnitt lediglich geringe Formänderungen nötig sind. Es kann jedoch auch generell zur Erstellung der finalen Form des polygonalen Profils eingesetzt werden, insbesondere dann, wenn in der Zusammenschau der Arbeitsschritte eine Aufteilung auf eine Erstellung einer Vorform mit einem anderen Fertigungsverfahren und ein finalisierendes Glattwalzen sich als weniger günstiger erweist.

Gemäß einer weiteren besonderen Ausführungsart ist vorgesehen, dass mit dem Glattwalzen eine Rauheit mit einem Rz-Wert (gemittelte Rautiefe) kleiner als 1 µm eingestellt wird.

Zudem kann mit dem Glattwalzen eine Rauheit mit einem Ra-Wert (Mittenrauwert) kleiner als 0,1 µm eingestellt werden.

Es hat sich gezeigt, dass hierdurch eine sehr geringe Reibung und eine hohe Stabilität der Drehmomentabstützung erzielt wird.

Weiterhin kann mit dem Glattwalzen an dem Führungsabschnitt eine kaltverfestigte Oberfläche an demselben hergestellt werden, wodurch eine hohe Haltbarkeit der Schubstange erzielt wird.

Gemäß einer weiteren besonderen Ausführungsart werden der Spindelabschnitt und der Führungsabschnitt einstückig hergestellt. Durch die Herstellung aus einem Stück bleibt die Fertigung einfach. Zudem werden etwaige Elastizitäten aus einem dezidierten Zusammenfügen der beiden Abschnitte, wie sie beispielsweise in DE 10 2016 200 102 A1 möglich erscheinen, vermieden.

In einer weiteren besonderen Ausführungsart des erfindungsgemäßen Verfahrens erfolgt das Glattwalzen an dem Führungsabschnitt in Längsrichtung der Schubstange, wobei mindestens eine Walze, vorzugsweise ein Walzenpaar, entlang des Führungsabschnitts an demselben abrollt. Hierdurch lässt sich eine verhältnismäßig große Hublänge in Axialrichtung der Schubstange effizient mit einer sehr präzisen und glattflächigen Oberfläche versehen.

Alternativ kann das Glattwalzen an dem Führungsabschnitt jedoch auch in Umfangsrichtung der Schubstange erfolgen, wobei mindestens eine Walze, vorzugsweise wiederum ein Walzenpaar, um die Längsrichtung der Schubstange herum an dem Führungsabschnitt abrollt um die finale Form des polygonalen Profils des Führungsabschnitts zu erzeugen. Nachfolgend wird die Erfindung anhand von in der Zeichnung dargestellten Ausführungsbeispielen näher erläutert. Die Zeichnung zeigt in:
- Fig. 1: eine schematische Ansicht einer Kraftfahrzeuglenkung,
- Fig. 2: ein Ausführungsbeispiel einer Schubstange nach der Erfindung,
- Fig. 3: eine Darstellung zur Veranschaulichung eines Glattwalzen längs zur Schubstange, und in
- Fig. 4: eine Darstellung zur Veranschaulichung eines Glattwalzen in Umfangsrichtung um die Schubstange herum.

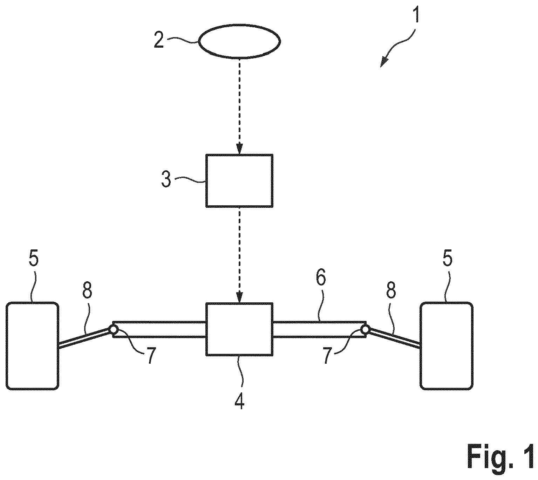

Fig. 1 zeigt eine schematische Darstellung einer Kraftfahrzeuglenkung 1 für ein Personenkraftfahrzeug oder ein leichtes Nutzfahrzeug, welche vorliegend beispielhaft als Steer-by-wire Kraftfahrzeuglenkung dargestellt, jedoch nicht hierauf beschränkt ist.

Die Kraftfahrzeuglenkung 1 umfasst eine Lenkungshandhabe 2, eine Steuereinrichtung 3 und ein Lenkgetriebe 4.

Zwischen der Lenkungshandhabe 2 und dem Lenkgetriebe 4 in Fig. 1 besteht keine mechanische Verbindung, die geeignet wäre einen an der Lenkungshandhabe 2 aufgebrachten Lenkbefehl eines Fahrers an das Lenkgetriebe 4 zu übertragen. Vielmehr erfolgt dies vorliegend auf elektrischen Weg unter Zwischenschaltung des Steuergeräts 3, dem seitens der Lenkungshandhabe 2 ein entsprechendes Messsignal übermittelt wird.

Die Steuereinrichtung 3 setzt dieses fahrerseitige Signal in ein Stellsignal für das Lenkgetriebe 4, insbesondere einen an diesem angeordneten Aktuator, beispielsweise einen Elektromotor, um, um den fahrerseitigen Lenkbefehl letztlich an den Fahrzeugrädern 5 zur Wirkung zu bringen. Dazu umfasst das Lenkgetriebe 4 eine mit den Fahrzeugrädern 5 gekoppelte Schubstange 10, welche über den Aktuator bzw. Elektromotor angetrieben wird. Fig. 1 zeigt zur Kopplung der Schubstange 10 mit den Fahrzeugrädern 5 entsprechende Spurstangengelenke 7 sowie zu den Fahrzeugrädern 5 führende Spurstangen 8.

In Abwandlung hiervon kann jedoch auch eine mechanische Kopplung zwischen der Lenkungshandhabe 2 und dem Lenkgetriebe 4, insbesondere der Schubstange 10 des Lenkgetriebes 4 vorgesehen sein.

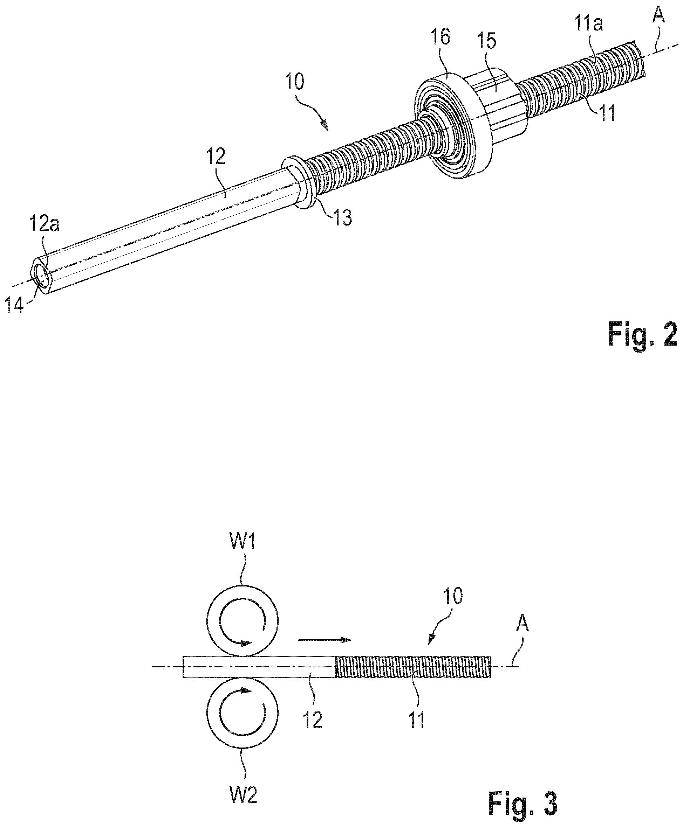

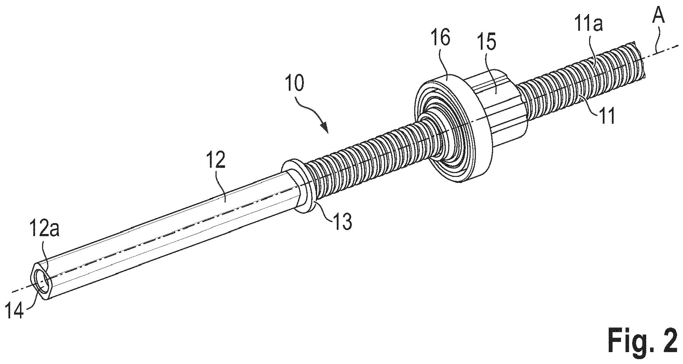

Fig. 2 zeigt beispielhaft eine mögliche Ausführung der Schubstange 10 des Lenkgetriebes 4.

Die Schubstange 10 umfasst mindestens einen Spindelabschnitt 11 mit einer Gewindespindel 11a und einen Führungsabschnitt 12 mit einem polygonalen Profil 12a zur Gleitführung und Verdrehsicherung an einer stationären Führungseinrichtung der Kraftfahrzeuglenkung 1.

Im Fall einer mechanischen Kopplung der Schubstange 10 mit der Lenkungshandhabe 2 kann an der Schubstange 10 zusätzlich ein Verzahnungsabschnitt oder dergleichen vorgesehen sein, welcher mit einem Ritzel einer Lenksäule in Eingriff steht. An einem dem Ritzel gegenüberliegenden Endabschnitt der Lenksäule ist wiederum die Lenkungshandhabe 2 befestigt.

Bei Ausführung als Steer-by-wire Kraftfahrzeuglenkung kann der Verzahnungsabschnitt entfallen, so dass die Schubstange 10 dann verzahnungsfrei ist.

Der Spindelabschnitt 11 ist mit dem Führungsabschnitt 12 verbunden. Insbesondere können der Spindelabschnitt 11 und der Führungsabschnitt 12 einstückig miteinander ausgeführt sein.

Der Spindelabschnitt 11 kann unmittelbar in den Führungsabschnitt 12 übergehen. Es können jedoch noch weitere Abschnitte für gegebenenfalls zusätzliche Funktionalitäten, gegebenenfalls auch zwischen dem Spindelabschnitt 11 und dem Führungsabschnitt 12, an der Schubstange 10 vorgesehen sein, wie beispielsweise ein Abschnitt 13 zur Lenkhubbegrenzung. Ferner können an der Schubstange 10 Anschlussabschnitte 14 für den Anschluss von Spurstangengelenken 7 vorgesehen sein.

Der Spindelabschnitt 11 bildet eine Gewindespindel 11a aus, die sich um die Längsachse A der Schubstange 10 windet und zum Eingriff mit einer Kugelgewindemutter 15 geeignet ist. Über eine solche Kugelgewindemutter 15 kann ein Drehmoment beispielsweise eines Elektromotors in eine Schubstangenkraft in Richtung der Längsachse A der Schubstange 10 übersetzt werden. Die Kugelgewindemutter 15 ist hierzu drehbar am Lenkgetriebe 4 gelagert und axial festgelegt. In Fig.2 ist hierzu beispielhaft ein entsprechendes Lager 16 dargestellt.

Um ein Mitdrehen der Schubstange 10 bei einem Drehen der Kugelgewindemutter 15 zu vermeiden, bietet der Führungsabschnitt 12 eine Momentenabstützung, indem dessen polygonales Profil 12a an einer Führungseinrichtung, welche am Lenkgetriebegehäuse 6 des Lenkgetriebes 4 angeordnet ist, axial geführt ist. Die Schubstange 10 kann somit in Richtung ihrer Längsachse A hin und her verschoben werden, jedoch nicht um die Längsachse A drehen.

Zur Gewährleistung einer stabilen Drehmomentabstützung sowie einer geringen Reibung ist die polygonale Form des Führungsabschnitts 12 in besonderer Art und Weise hergestellt. In Fig. 2 ist das polygonale Profil 12a beispielhaft als Vierkantprofil dargestellt, ohne dass die Erfindung jedoch auf diese polygonale Profilform beschränkt wäre.

Bei der Herstellung der Schubstange 10 ist vorgesehen, dass an dem Führungsabschnitt 12 die finale Form des polygonalen Profils 12a durch Glattwalzen hergestellt wird. Glattwalzen ist ein umformtechnischer Formgebungsprozess unter Verwendung geeigneter Walzen W1 und W2 oder Kugeln. Im Sinne der vorliegenden Erfindung schließt Glattwalzen als Unterausführungsart ein Festwalzen mit ein. Beim Glattwalzen wird die Randschicht des Führungsabschnitts 12 plastifiziert und umgeformt. Die Glättung erfolgt durch ein Fließen der oberflächennahen Werkstoffschicht. Hierdurch sind Oberflächengüten an der Schubstange 10 möglich, welche sich spanend nicht wirtschaftlich fertigen lassen.

Insbesondere ist es möglich, an dem Führungsabschnitt 12 eine Rauheit mit einem Rz-Wert vorzugsweise kleiner als 1 µm und/oder mit einem Ra-Wert vorzugsweise kleiner als 0,1 µm einzustellen.

Zudem kann mit dem Glattwalzen an dem Führungsabschnitt 12 eine Kaltverfestigung an der Oberfläche eingestellt werden.

Ein Glattwalzen lässt sich zudem gut in einen Fertigungsprozess einbeziehen, in dem an der Schubstange 10 auch eine Spindelabschnitt 11 für einen Kugelgewindetrieb vorgesehen werden soll.

Für den Führungsabschnitt 12 kann zunächst eine Vorform mit einem polygonalen Vorprofil hergestellt werden. Anschließend kann die Schubstange 10 im Bereich dieser Vorform zusätzlich einem Glattwalzen zur Erstellung der finalen Form des polygonalen Profils 12a unterzogen werden.

Die Herstellung des polygonalen Vorprofils kann durch ein umformendes Fertigungsverfahren und/oder ein spanabhebendes Fertigungsverfahren erfolgen.

Zur Herstellung des polygonalen Vorprofils werden vorzugsweise Fertigungstechniken wie Halbwarmschmieden, Taumelschmieden, Fräsen, Drehen und Schleifen eingesetzt.

In Abwandlung hiervon kann der Führungsabschnitt 12 für die finale Form des polygonalen Profils 12a auch vollständig aus einer Vorform durch Glattwalzen konturgewalzt werden. Eine Zwischenbearbeitung eines Rohlings durch andere Fertigungstechniken wird in diesem Fall vermieden.

Eine Möglichkeit für das Glattwalzen des polygonalen Profils 12a besteht in einem Längswalzen, wie dies in Fig. 3 veranschaulicht ist. Mit anderen Worten, das Glattwalzen an dem Führungsabschnitt 12 erfolgt in Längsrichtung der Schubstange 10, das heißt in Richtung der Längsachse A derselben, wobei mindestens eine Walze W1, W2 entlang des Führungsabschnitts 12 an demselben abrollt, um die polygonale Form 12a zu erhalten. Je nach Prozessführung wird hierbei die Formgebung vorgenommen oder es erfolgt lediglich noch ein Glätten des bereits polygonal vorprofilierten Führungsabschnitts 12.

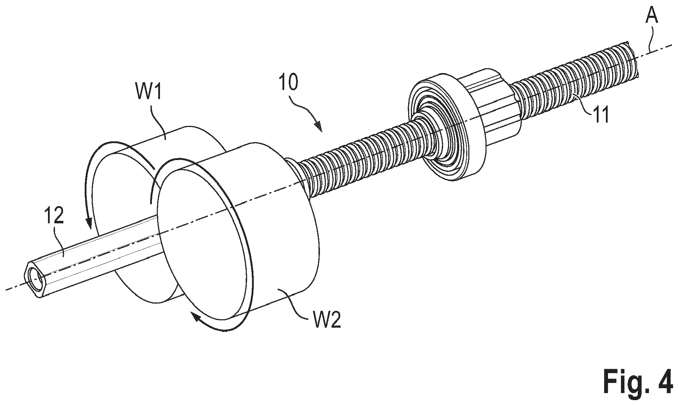

Eine weitere Möglichkeit für das Glattwalzen des polygonalen Profils 12a besteht in einem Umfangswalzen, wie dies in Fig. 4 veranschaulicht ist. Hierbei erfolgt das Glattwalzen an dem Führungsabschnitt 12 in Umfangsrichtung der Schubstange 10, wobei mindestens eine Walze W1, W2 um die Längsachse A der Schubstange 10 herum an dem Führungsabschnitt 12 abrollt. Die Drehachse der Walze W1, W2 ist dabei parallel zur Längsachse A der Schubstange 10.

Auch hier kann je nach Prozessführung die eigentliche polygonale Formgebung vorgenommen werden oder es erfolgt lediglich noch ein Glätten eines bereits polygonal vorprofilierten Führungsabschnitts 12.

Es ergibt sich damit eine Schubstange 10 umfassend einen Spindelabschnitt 12 mit einer Gewindespindel 12a und einen Führungsabschnitt 11 mit einem polygonalen Profil 12a zur Gleitführung und Verdrehsicherung an einer stationären Führungseinrichtung der Kraftfahrzeuglenkung 1, wobei die finale Form des polygonalen Profils 12a des Führungsabschnitts 12 durch Glattwalzen hergestellt ist.

Vorzugsweise weist das polygonale Profils 12a eine kaltverfestigte Oberfläche auf. Zudem kann das polygonale Profil 12 a an seiner Oberfläche eine Rauheit mit einem Rz-Wert kleiner als 5 µm, vorzugsweise kleiner als 1 µm aufweisen. Ferner kann das polygonale Profil 12a an seiner Oberfläche eine Rauheit mit einem Ra-Wert kleiner als 0,5 µm, vorzugsweise kleiner als 0,1 µm aufweisen.

Dies ermöglicht eine Kraftfahrzeuglenkung 1 mit einer solchen Schubstange 10, welche sich durch geringe innere Reibung sowie durch eine in Drehrichtung sehr stabile Lage der Schubstange 10 auszeichnet.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel und die Abwandlungen beschränkt, sondern umfasst alle durch die Patentansprüche definierten Ausgestaltungen.

### Bezugszeichenliste

- 1: Kraftfahrzeuglenkung
- 2: Lenkungshandhabe
- 3: Steuereinrichtung
- 4: Lenkgetriebe
- 5: Fahrzeugrad
- 6: Lenkgetriebegehäuse
- 7: Spurstangengelenk
- 8: Spurstange
- 10: Schubstange
- 11: Spindelabschnitt
- 11a: Gewindespindel
- 12: Führungsabschnitt
- 12a: polygonalen Profil
- 13: Abschnitt zur Lenkhubbegrenzung
- 14: Anschlussabschnitt
- 15: Kugelgewindemutter
- 16: Lager
- A: Längsachse der Schubstange

## Patentansprüche

1. Verfahren zur Herstellung einer Schubstange (10) für eine Kraftfahrzeuglenkung (1), wobei die Schubstange (10) mindestens einen Spindelabschnitt (11) mit einer Gewindespindel (11a) und einen Führungsabschnitt (12) mit einem polygonalen Profil (12a) zur Gleitführung und Verdrehsicherung an einer stationären Führungseinrichtung der Kraftfahrzeuglenkung (1) aufweist, **dadurch gekennzeichnet, dass** an dem Führungsabschnitt (12) die finale Form des polygonalen Profils (12a) durch Glattwalzen hergestellt wird.

2. Verfahren nach Anspruch 1, **dadurch gekennzeichnet, dass** für den Führungsabschnitt (12) zunächst eine Vorform mit einem polygonalen Vorprofil hergestellt wird und die Schubstange (10) im Bereich dieser Vorform zusätzlich einem Glattwalzen zur Erstellung der finalen Form des polygonalen Profils (12a) unterzogen wird.

3. Verfahren nach Anspruch 2, **dadurch gekennzeichnet, dass** die Herstellung des polygonalen Vorprofils vor dem Glattwalzen erfolgt durch
- ein umformendes Fertigungsverfahren und/oder
- ein spanabhebendes Fertigungsverfahren.

4. Verfahren nach Anspruch 1, **dadurch gekennzeichnet, dass** die Formgebung an dem Führungsabschnitt (12) für die finale Form des polygonalen Profils (12a) aus einer Vorform durch Glattwalzen vollständig konturgewalzt wird.

5. Verfahren nach einem der Ansprüche 1 bis 4, **dadurch gekennzeichnet, dass** mit dem Glattwalzen eine Rauheit mit einem Rz-Wert kleiner als 1 µm eingestellt wird.

6. Verfahren nach einem der Ansprüche 1 bis 5, **dadurch gekennzeichnet, dass** mit dem Glattwalzen eine Rauheit mit einem Ra-Wert kleiner als 0,1 µm eingestellt wird.

7. Verfahren nach einem der Ansprüche 1 bis 6, **dadurch gekennzeichnet, dass** mit dem Glattwalzen an dem Führungsabschnitt (12) eine kaltverfestigte Oberfläche hergestellt wird

8. Verfahren nach einem der Ansprüche 1 bis 7, **dadurch gekennzeichnet, dass** der Spindelabschnitt (11) und der Führungsabschnitt (12) einstückig hergestellt werden.

9. Verfahren nach einem der Ansprüche 1 bis 8, **dadurch gekennzeichnet, dass** das Glattwalzen an dem Führungsabschnitt (12) in Längsrichtung der Schubstange (10) erfolgt, wobei mindestens eine Walze (W1, W2) entlang des Führungsabschnitts (12) an demselben abrollt.

10. Verfahren nach einem der Ansprüche 1 bis 8, **dadurch gekennzeichnet, dass** das Glattwalzen an dem Führungsabschnitt (12) in Umfangsrichtung der Schubstange (10) erfolgt, wobei mindestens eine Walze (W1, W2) um die Längsrichtung der Schubstange (10) herum an dem Führungsabschnitt (12) abrollt.
